# EUROPÄISCHE PATENTSCHRIFT

(11) **EP 2 842 214 B1**
(45) Veröffentlichungstag und Bekanntmachung des Hinweises auf die Patenterteilung: **18.05.2016**
(21) Anmeldenummer: 13712750.2
(22) Anmeldetag: 25.03.2013
(51) Int. Cl.: H02J 7/00, B60L 8/00, B60L 11/12, B60L 11/18

(54) **VERFAHREN ZUM LADEN VON ENERGIESPEICHERZELLEN EINER ENERGIESPEICHEREINRICHTUNG UND AUFLADBARE ENERGIESPEICHEREINRICHTUNG**
METHOD FOR CHARGING THE ENERGY STORAGE CELLS OF AN ENERGY STORAGE DEVICE, AND RECHARGEABLE ENERGY STORAGE DEVICE
PROCÉDÉ DE CHARGE D'ÉLÉMENTS ACCUMULATEURS D'UN SYSTÈME D'ACCUMULATION D'ÉNERGIE ET SYSTÈME D'ACCUMULATION D'ÉNERGIE CHARGEABLE

(30) Priorität: 23.04.2012 DE 102012206622
(43) Veröffentlichungstag der Anmeldung: 04.03.2015
(73) Patentinhaber: Robert Bosch GmbH, 70442 Stuttgart (DE)
(72) Erfinder: FEUERSTACK, Peter, 71642 Ludwigsburg (DE); WEISSENBORN, Erik, 70374 Stuttgart (DE); KESSLER, Martin, 73527 Schwaebisch Gmuend (DE); FASSNACHT, Jochen, 75365 Calw (DE)
(86) Internationale Anmeldenummer: PCT/EP2013/056198
(87) Internationale Veröffentlichungsnummer: WO 2013/160041

(56) Entgegenhaltungen:
- DE-A1-102009 014 386
- DE-A1-102009 046 501
- DE-A1-102009 054 818
- US-A1- 2004 135 545

## Beschreibung

Die Erfindung betrifft ein Verfahren zum Laden von Energiespeicherzellen einer Energiespeichereinrichtung und eine aufladbare Energiespeichereinrichtung, insbesondere eine Energiespeichereinrichtung mit modularem Batteriesystem für ein elektrisch betriebenes Fahrzeug.

### Stand der Technik

Es zeichnet sich ab, dass in Zukunft sowohl bei stationären Anwendungen, wie z.B. Windkraftanlagen oder Solaranlagen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren.

Die Einspeisung von mehrphasigem Strom in eine elektrische Maschine wird üblicherweise durch einen Umrichter in Form eines Pulswechselrichters bewerkstelligt. Dazu kann eine von einem Gleichspannungszwischenkreis bereitgestellte Gleichspannung in eine mehrphasige Wechselspannung, beispielsweise eine dreiphasige Wechselspannung umgerichtet werden. Der Gleichspannungszwischenkreis wird dabei von einem Strang aus seriell verschalteten Batteriemodulen gespeist. Um die für eine jeweilige Anwendung gegebenen Anforderungen an Leistung und Energie erfüllen zu können, werden häufig mehrere Batteriemodule in einer Traktionsbatterie in Serie geschaltet.

Die Druckschrift DE 10 2009 054 818 A1 (vgl. dem Oberbegriff der Ansprüche 1 und 6) offenbart einen Umrichter für ein elektrisches Energiespeichersystem mit einem Energieübertrager, einem Wechselrichter und einem zwischen dem Energieübertrager und dem Wechselrichter zwischengeschalteten Zwischenkreis, der mindestens einen Zwischenkreiskondensator aufweist, wobei der Energieübertrager mehrere Gleichspannungswandler besitzt, die zwischenkreisseitig mit einander parallel und/oder in Serie geschaltet sind und jeder der Gleichspannungswandler mittels eines ersten und eines zweiten Eingangs an jeweils ein Energiespeichermodul des Energiespeichersystems anschließbar ist, wobei der Zwischenkreiskondensator ein Zwischenspeicher einer vom Energieübertrager zumindest mitgebildeten Speichermodul-Ausgleichsschaltung ist.

Die Druckschriften DE 10 2010 027 857 A1 und DE 10 2010 027 861 A1 offenbaren modular verschaltete Batteriezellen in Energiespeichereinrichtungen, die über eine geeignete Ansteuerung von Koppeleinheiten selektiv in den Strang aus seriell verschalteten Batteriezellen zu- oder abgekoppelt werden können. Systeme dieser Art sind unter dem Namen Battery Direct Converter (Batteriedirektwandler, BDC) bekannt. Solche Systeme umfassen Gleichstromquellen in einem Energiespeichermodulstrang, welche an einen Gleichspannungszwischenkreis zur elektrischen Energieversorgung einer elektrischen Maschine oder eines elektrischen Netzes über einen Pulswechselrichter anschließbar sind.

Der Energiespeichermodulstrang weist dabei eine Mehrzahl von in Serie geschalteten Energiespeichermodulen auf, wobei jedes Energiespeichermodul mindestens eine Batteriezelle und eine zugeordnete steuerbare Koppeleinheit aufweist, welche es erlaubt, in Abhängigkeit von Steuersignalen die jeweils zugeordnete mindestens eine Batteriezelle zu überbrücken oder die jeweils zugeordnete mindestens eine Batteriezelle in den jeweiligen Energiespeichermodulstrang zu schalten. Optional kann die Koppeleinheit derart gestaltet sein, dass sie es zusätzlich erlaubt, die jeweils zugeordnete mindestens eine Batteriezelle auch mit inverser Polarität in den jeweiligen Energiespeichermodulstrang zu schalten oder auch den jeweiligen Energiespeichermodulstrang zu unterbrechen.

BDCs weisen üblicherweise einen höheren Wirkungsgrad und eine höhere Ausfallsicherheit gegenüber herkömmlichen Systemen auf. Die Ausfallsicherheit wird unter anderem dadurch gewährleistet, dass defekte, ausgefallene oder nicht voll leistungsfähige Batteriezellen durch geeignete Überbrückungsansteuerung der Koppeleinheiten aus dem Energieversorgungsstrang herausgeschaltet werden können. Die Gesamtausgangsspannung des Energiespeichermodulstrangs kann durch entsprechendes Ansteuern der Koppeleinheiten variiert und insbesondere stufig eingestellt werden. Die Stufung der Ausgangsspannung ergibt sich dabei aus der Spannung eines einzelnen Energiespeichermoduls, wobei die maximal mögliche Gesamtausgangsspannung durch die Summe der Spannungen aller Energiespeichermodule des Energiespeichermodulstrangs bestimmt wird.

Zur Einstellung einer Ausgangsspannung eines Energiespeichermoduls kann eine pulsbreitenmodulierte (PWM) Ansteuerung der Koppeleinheiten erfolgen. Dadurch ist es möglich, durch gezielte Variation der Ein- bzw. Ausschaltzeiten einen gewünschten Mittelwert als Energiespeichermodulspannung auszugeben.

Für BDCs ist es notwendig, Ladestrategien zu entwickeln, mit denen die Batteriezellen der Energiespeichermodule einfach, effizient und flexibel wieder aufzuladen.

### Offenbarung der Erfindung

Die vorliegende Erfindung schafft gemäß einem Aspekt ein Verfahren zum Laden von Energiespeicherzellen einer Energiespeichereinrichtung nach Anspruch 1 mit einer Vielzahl von in einem Energieversorgungsstrang in Serie geschalteten Energiespeichermodulen, welche jeweils ein Energiespeicherzellenmodul, welches mindestens eine Energiespeicherzelle aufweist, und eine Koppeleinrichtung mit Koppelelementen umfassen, welche dazu ausgelegt sind, das Energiespeicherzellenmodul selektiv in den Energieversorgungsstrang zu schalten oder zu überbrücken. Das Verfahren weist dabei die Schritte des Koppelns der Ausgangsanschlüsse der Energiespeichereinrichtung mit einer Gleichspannungsquelle, des Ansteuerns der Koppeleinrichtungen aller Energiespeichermodule zum Überbrücken der Energiespeicherzellenmodule in dem Energieversorgungsstrang für eine erste vorbestimmte Zeitspanne, und des Ansteuerns der Koppeleinrichtungen mindestens eines ersten Energiespeichermoduls zum Schalten des Energiespeicherzellenmoduls des ersten Energiespeichermoduls in den Energieversorgungsstrang für eine zweite vorbestimmte Zeitspanne, nachdem die erste vorbestimmte Zeitspanne verstrichen ist.

Gemäß einem weiteren Aspekt schafft die vorliegende Erfindung ein System nach Anspruch 6, mit einer Energiespeichereinrichtung mit einer Vielzahl von in einem Energieversorgungsstrang in Serie geschalteten Energiespeichermodulen, welche jeweils ein Energiespeicherzellenmodul, welches mindestens eine Energiespeicherzelle aufweist, und eine Koppeleinrichtung mit Koppelelementen umfassen, welche dazu ausgelegt sind, das Energiespeicherzellenmodul selektiv in den Energieversorgungsstrang zu schalten oder zu überbrücken. Das System weist weiterhin einen Gleichspannungszwischenkreis, welcher mit Ausgangsanschlüssen der Energiespeichereinrichtung gekoppelt ist, einen Pulswechselrichter, welcher mit dem Gleichspannungszwischenkreis gekoppelt ist, und welcher aus dem Gleichspannungszwischenkreis mit einer Eingangsspannung gespeist wird, eine elektrische Maschine, welche mit dem Pulswechselrichter gekoppelt ist, und welche von dem Pulswechselrichter mit einer Phasenspannung versorgt wird, eine Gleichspannungsquelle, welche schaltbar mit den Ausgangsanschlüssen der Energiespeichereinrichtung verbunden ist, und eine Steuereinrichtung auf, welche mit den Koppeleinrichtungen gekoppelt ist, und welche dazu ausgelegt ist, die Koppeleinrichtungen der Energiespeichereinrichtung zum Bereitstellen einer Gesamtausgangsspannung der Energiespeichereinrichtung selektiv anzusteuern und ein erfindungsgemäßes Verfahren durchzuführen.

### Vorteile der Erfindung

Es ist Idee der vorliegenden Erfindung, eine modular aufgebaute Energiespeichereinrichtung mit in einem Energieversorgungsstrang seriell verschalteten Batteriezellen über eine Gleichspannungsquelle zu laden. Dabei werden bereits in der Energiespeichereinrichtung verwendete Komponenten verwendet, um über einen hochfrequenten Wechsel zwischen Ladestromentnahme aus der Gleichspannungsquelle und Transferieren des zwischengespeicherten Ladestroms in eines oder mehrere der Energiespeichermodule die Energiespeicherzellen der Energiespeichereinrichtung aufzuladen. Die Koppeleinrichtungen der Energiespeichermodule realisieren dabei zusammen mit einer Speicherdrossel oder parasitären Induktivitäten der Energiespeicherzellenmodule eine Hochsetzstellerfunktionalität für die Gleichspannungsquelle, so dass diese für die Energiespeicherzellen als einstellbare Konstantstromquelle erscheint.

Dies hat den Vorteil, dass die Energiespeichereinrichtung ohne zusätzliche Bauelemente geladen werden kann, was Bauraum, Gewicht und Effizienz der Energiespeichereinrichtung erheblich verbessert. Weiterhin können verschiedene Energiespeichermodule flexibel geladen werden, wodurch Ladungsunterschiede zwischen den Energiespeicherzellenmodulen ausgeglichen werden können.

Zudem bietet sich der Vorteil, dass der Ladestrom unabhängig von der Gleichspannung der Gleichspannungsquelle eingestellt werden kann. Dadurch können verschiedene Gleichspannungsquellen als Ladequelle eingesetzt werden. Insbesondere können auch Gleichspannungsquellen mit höherer Gleichspannung als die maximale Modulspannung der Energiespeichermodule eingesetzt werden.

Schließlich können die Schaltverluste im Ladebetrieb minimiert werden, indem die parasitären Induktivitäten der Energiespeicherzellenmodule in die Ladestrategie miteinbezogen werden.

Gemäß einer Ausführungsform des erfindungsgemäßen Verfahrens kann der Schritt des Koppelns das Koppeln eines der Ausgangsanschlüsse der Energiespeichereinrichtung mit der Gleichspannungsquelle über eine Koppelinduktivität umfassen, und die Dauer der zweiten vorbestimmten Zeitspanne von einem Betrag des Stroms durch die Koppelinduktivität abhängig sein. Auf diese Weise kann über die Koppelinduktivität als Energiezwischenspeicher einerseits die Ladespannung der Gleichspannungsquelle hochgesetzt werden, andererseits Stromschwankungen im Ladestrom geglättet werden.

Alternativ kann die Dauer der zweiten vorbestimmten Zeitspanne von einem Betrag des Stromflusses durch das Energiespeicherzellenmodul des ersten Energiespeichermoduls abhängig sein. Dadurch können die parasitären Induktivitäten der Energiespeicherzellenmodule ausgenutzt werden, um die Hochsetzstellerfunktion zu realisieren.

Gemäß einer weiteren Ausführungsform des erfindungsgemäßen Verfahrens können die Schritte des Überbrückens der Energiespeicherzellenmodule und des Schaltens mindestens eines Energiespeicherzellenmoduls in den Energieversorgungsstrang iteriert werden.

Gemäß einer weiteren Ausführungsform des erfindungsgemäßen Verfahrens kann in einem Iterationsschritt ein Ansteuern der Koppeleinrichtungen mindestens eines zweiten Energiespeichermoduls zum Schalten des Energiespeicherzellenmoduls des zweiten Energiespeichermoduls in den Energieversorgungsstrang erfolgen.

Gemäß einer Ausführungsform des erfindungsgemäßen Systems können die Koppeleinrichtungen Koppelelemente in Vollbrückenschaltung umfassen. Alternativ können die Koppeleinrichtungen Koppelelemente in Halbbrückenschaltung umfassen.

Gemäß einer weiteren Ausführungsform des erfindungsgemäßen Systems können die Energiespeicherzellen Lithium-Ionen-Akkumulatoren umfassen.

Gemäß einer weiteren Ausführungsform des erfindungsgemäßen Systems kann das System weiterhin einer Koppelinduktivität umfassen, welche zwischen einen der Ausgangsanschlüsse der Energiespeichereinrichtung und die Gleichspannungsquelle gekoppelt ist.

Gemäß einer weiteren Ausführungsform des erfindungsgemäßen Systems kann die Gleichspannungsquelle eine Solarzelle, ein Reichweitenerweiterer, eine Niedervoltbatterie oder eine Zwei-Quadranten-Stromquelle sein. Mit diesen Möglichkeiten ist das System sehr flexibel aufladbar. Zudem können bereits in den System vorhandene Energiequellen zum Laden der Energiespeichereinrichtung genutzt werden.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung eines Systems mit einer Energiespeichereinrichtung gemäß einer Ausführungsform der vorliegenden Erfindung;
- Fig. 2: eine schematische Darstellung eines Ausführungsbeispiels eines Energiespeichermoduls einer Energiespeichereinrichtung nach Fig. 1;
- Fig. 3: eine schematische Darstellung eines weiteren Ausführungsbeispiels eines Energiespeichermoduls einer Energiespeichereinrichtung nach Fig. 1; und
- Fig. 4: eine schematische Darstellung eines Verfahrens zum Laden von Energiespeicherzellen einer Energiespeichereinrichtung in einem System gemäß einer weiteren Ausführungsform der vorliegenden Erfindung.

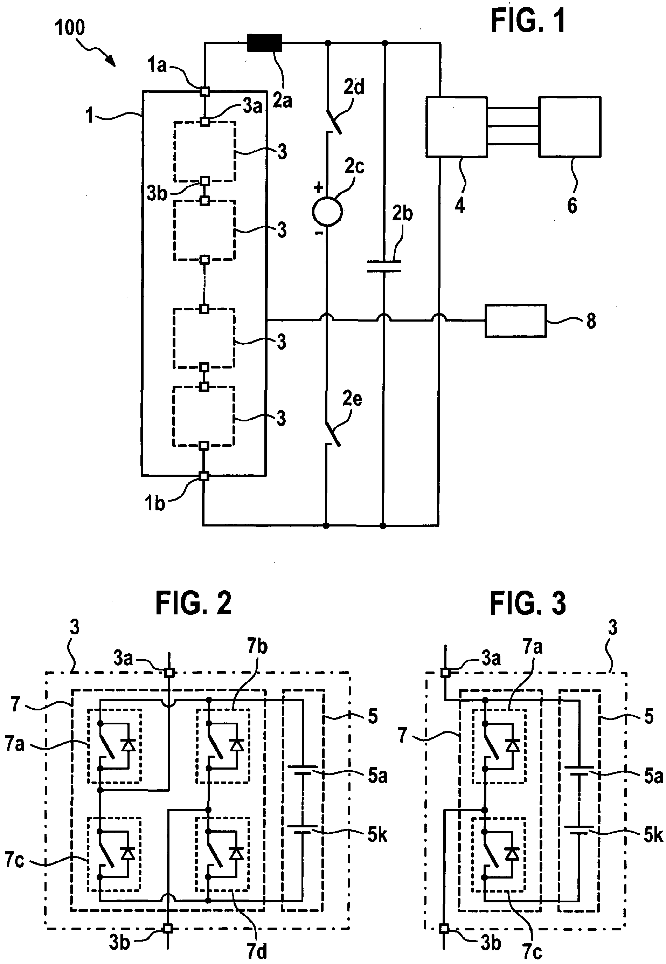

Fig. 1 zeigt ein System 100 zur Spannungswandlung von durch Energiespeichermodule 3 bereitgestellter Gleichspannung in eine n-phasige Wechselspannung. Das System 100 umfasst eine Energiespeichereinrichtung 1 mit Energiespeichermodulen 3, welche in einem Energieversorgungsstrang in Serie geschaltet sind. Der Energieversorgungsstrang ist zwischen zwei Ausgangsanschlüsse 1 a und 1 b der Energiespeichereinrichtung 1 gekoppelt, die jeweils an einen Gleichspannungszwischenkreis 2b gekoppelt sind. Beispielhaft dient das System 100 in Fig. 1 zur Speisung einer dreiphasigen elektrischen Maschine 6. Es kann jedoch auch vorgesehen sein, dass die Energiespeichereinrichtung 1 zur Erzeugung von elektrischem Strom für ein Energieversorgungsnetz 6 verwendet wird.

Dazu ist die Energiespeichereinrichtung 1 über eine Koppelinduktivität 2a mit dem Gleichspannungszwischenkreis 2b gekoppelt. Die Koppelinduktivität 2a kann beispielsweise eine gezielt zwischen den Gleichspannungszwischenkreis 2b und den Ausgangsanschluss 1a der Energiespeichereinrichtung 1 geschaltete induktive Drossel sein. Alternativ kann es auch möglich sein, dass die Koppelinduktivität 2a durch ohnehin vorhandene parasitäre Induktivitäten in der Verschaltung zwischen Energiespeichereinrichtung 1 und Gleichspannungszwischenkreis 2b gebildet wird.

Der Gleichspannungszwischenkreis 2b speist einen Pulswechselrichter 4, welcher aus der Gleichspannung des Gleichspannungszwischenkreises 2b eine dreiphasige Wechselspannung für die elektrische Maschine 6 bereitstellt.

Das System 100 kann weiterhin eine Steuereinrichtung 8 umfassen, welche mit der Energiespeichereinrichtung 1 verbunden ist, und mithilfe derer die Energiespeichereinrichtung 1 gesteuert werden kann, um die gewünschte Gesamtausgangsspannung der Energiespeichereinrichtung 1 an den jeweiligen Ausgangsanschlüssen 1a, 1b bereitzustellen. Zudem kann die Steuereinrichtung 8 dazu ausgelegt sein, bei einem Laden der Energiespeicherzellen der Energiespeichereinrichtung 1 die jeweiligen Koppelelemente bzw. aktiven Schaltelemente der Energiespeichereinrichtung 1 anzusteuern.

An die Ausgangsanschlüsse 1a, 1b der Energiespeichereinrichtung 1 ist eine Gleichspannungsquelle 2c angeschlossen. Beispielsweise kann die Gleichspannungsquelle 2c über Trennschütze 2d, 2e selektiv parallel zu dem Gleichspannungszwischenkreis 2b geschaltet werden. Die Gleichspannungsquelle 2c kann beispielsweise eine Solarzelle, ein Reichweitenerweiterer (sogenannter "Range Extender") eines Hybridfahrzeugs, eine Niedervoltbatterie, beispielsweise eines Bordnetzes eines Fahrzeugs, oder ein Zwei-Quadranten-Stromsteller sein. Auch die Trennschütze 2d, 2e können über die Steuereinrichtung 8 angesteuert werden.

Der Energieversorgungsstrang der Energiespeichereinrichtung 1 weist mindestens zwei in Reihe geschaltete Energiespeichermodule 3 auf. Beispielhaft beträgt die Anzahl der Energiespeichermodule 3 in Fig. 1 vier, wobei jedoch jede andere Anzahl von Energiespeichermodulen 3 ebenso möglich ist. Die Energiespeichermodule 3 weisen jeweils zwei Ausgangsanschlüsse 3a und 3b auf, über welche eine Modulausgangsspannung der Energiespeichermodule 3 bereitgestellt werden kann. Da die Energiespeichermodule 3 primär in Reihe geschaltet sind, summieren sich die Modulausgangsspannungen der Energiespeichermodule 3 zu der Gesamtausgangsspannung, welche an den Ausgangsanschlüssen 1a, 1b der Energiespeichereinrichtung 1 bereitgestellt wird.

Zwei beispielhafte Aufbauformen der Energiespeichermodule 3 sind in den Fig. 2 und Fig. 3 in größerem Detail gezeigt. Die Energiespeichermodule 3 umfassen dabei jeweils eine Koppeleinrichtung 7 mit mehreren Koppelelementen 7a, 7c sowie 7b und 7d. Die Energiespeichermodule 3 umfassen weiterhin jeweils ein Energiespeicherzellenmodul 5 mit einem oder mehreren in Reihe geschalteten Energiespeicherzellen 5a bis 5k.

Das Energiespeicherzellenmodul 5 kann dabei beispielsweise in Reihe geschaltete Zellen 5a bis 5k, beispielsweise Lithium-Ionen-Zellen oder -Akkumulatoren aufweisen. Dabei beträgt die Anzahl der Energiespeicherzellen 5a bis 5k in den in Fig. 2 und Fig. 3 gezeigten Energiespeichermodulen 3 beispielhaft zwei, wobei jedoch jede andere Zahl von Energiespeicherzellen 5a bis 5k ebenso möglich ist. Die Energiespeicherzellenmodule 5 weisen eine Klemmenspannung von U_{M} auf und sind über Verbindungsleitungen mit Eingangsanschlüssen der zugehörigen Koppeleinrichtung 7 verbunden. An den Eingangsklemmen der zugehörigen Koppeleinrichtung 7 liegt also die Spannung U_{M} an.

In Fig. 2 bilden die in Reihe geschalteten Koppelelemente 7a und 7c, deren Mittelabgriff mit der Ausgangsklemmen 3a verbunden ist, den so genannten linken Zweig der Vollbrücke und es bilden die in Reihe geschalteten Koppelelemente 7b und 7d, deren Mittelabgriff mit der Ausgangsklemme 3b verbunden ist, den so genannten rechten Zweig der Vollbrücke. Die Koppeleinrichtung 7 ist in Fig. 2 als Vollbrückenschaltung mit je zwei Koppelelementen 7a, 7c und zwei Koppelelementen 7b, 7d ausgebildet. Die Koppelelemente 7a, 7b, 7c, 7d können dabei jeweils ein aktives Schaltelement, beispielsweise einen Halbleiterschalter, und eine dazu parallel geschaltete Freilaufdiode aufweisen. Es kann dabei vorgesehen sein, dass die Koppelelemente 7a, 7b, 7c, 7d als MOSFET-Schalter ausgebildet sind, welche bereits eine intrinsische Diode aufweisen.

Die Koppelelemente 7a, 7b, 7c, 7d können derart angesteuert werden, beispielsweise mit Hilfe der in Fig. 1 dargestellten Steuereinrichtung 9, dass das jeweilige Energiespeicherzellenmodul 5 selektiv zwischen die Ausgangsanschlüsse 3a und 3b geschaltet wird oder dass das Energiespeicherzellenmodul 5 überbrückt wird. Mit Bezug auf Fig. 2 kann das Energiespeicherzellenmodul 5 beispielsweise in Vorwärtsrichtung zwischen die Ausgangsanschlüsse 3a und 3b geschaltet werden, indem das aktive Schaltelement des Koppelelements 7d und das aktive Schaltelement des Koppelelements 7a in einen geschlossenen Zustand versetzt werden, während die beiden übrigen aktiven Schaltelemente der Koppelelemente 7b und 7c in einen offenen Zustand versetzt werden. In diesem Fall liegt zwischen den Ausgangsklemmen 3a und 3b der Koppeleinrichtung 7 die Spannung U_{M} an. Ein Überbrückungszustand kann beispielsweise dadurch eingestellt werden, dass die beiden aktiven Schaltelemente der Koppelelemente 7a und 7b in geschlossenen Zustand versetzt werden, während die beiden aktiven Schaltelemente der Koppelelemente 7c und 7d in offenem Zustand gehalten werden. Ein zweiter Überbrückungszustand kann beispielsweise dadurch eingestellt werden, dass die beiden aktiven Schalter der Koppelelemente 7c und 7d in geschlossenen Zustand versetzt werden, während die aktiven Schaltelemente der Koppelelemente 7a und 7b in offenem Zustand gehalten werden. In beiden Überbrückungszuständen liegt zwischen den beiden Ausgangsklemmen 3a und 3b der Koppeleinrichtung 7 die Spannung 0 an. Ebenso kann das Energiespeicherzellenmodul 5 in Rückwärtsrichtung zwischen die Ausgangsanschlüsse 3a und 3b der Koppeleinrichtung 7 geschaltet werden, indem die aktiven Schaltelemente der Koppelelemente 7b und 7c in geschlossenen Zustand versetzt werden, während die aktiven Schaltelemente der Koppelelemente 7a und 7d in offenen Zustand versetzt werden. In diesem Fall liegt zwischen den beiden Ausgangsklemmen 3a und 3b der Koppeleinrichtung 7 die Spannung -U_{M} an.

Durch geeignetes Ansteuern der Koppeleinrichtungen 7 können daher einzelne Energiespeicherzellenmodule 5 der Energiespeichermodule 3 gezielt in die Reihenschaltung des Energieversorgungsstrangs integriert werden. Dadurch kann durch eine gezielte Ansteuerung der Koppeleinrichtungen 7 zum selektiven Schalten der Energiespeicherzellenmodule 5 der Energiespeichermodule 3 in den Energieversorgungsstrang eine Gesamtausgangsspannung bereitgestellt werden, die von den einzelnen Ausgangsspannungen der Energiespeicherzellenmodule 5 der Energiespeichermodule 3 abhängig ist. Die Gesamtausgangsspannung kann dabei jeweils in Stufen eingestellt werden, wobei die Anzahl der Stufen mit der Anzahl der Energiespeichermodule 3 skaliert. Bei einer Anzahl von n Energiespeichermodulen 3 kann die Gesamt-Ausgangsspannung des Energieversorgungsstrangs in 2n+1 Stufen zwischen - *n* · *U_{M}*,...,0,...,+*n* · *U_{M}* eingestellt werden.

Fig. 3 zeigt eine schematische Darstellung einer weiteren beispielhaften Ausgestaltungsform für ein Energiespeichermodul 3. Dabei umfasst die Koppeleinrichtung 7 nur die Koppelelemente 7a und 7c, die als Halbbrückenschaltung das Energiespeicherzellenmodul 5 entweder in einen Überbrückungszustand oder einen Schaltzustand in Vorwärtsrichtung in den Energieversorgungsstrang geschaltet werden können. Im Übrigen gelten ähnliche Ansteuerregeln wie im Zusammenhang mit Fig. 3 für das dort gezeigte Energiespeichermodul 3 in Vollbrückenschaltung erläutert.

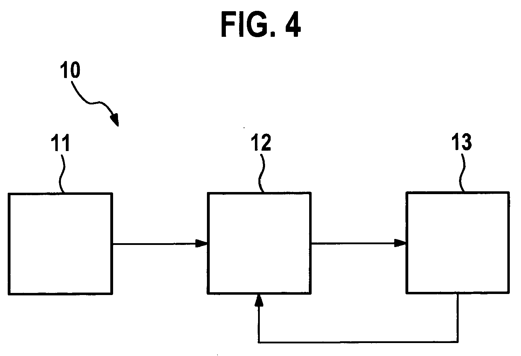

Fig. 4 zeigt eine schematische Darstellung eines Verfahrens 10 zum Laden von Energiespeicherzellen einer Energiespeichereinrichtung, beispielsweise von Energiespeicherzellen 5a bis 5k der Energiespeichereinrichtung 1 in Fig. 1. Das Verfahren 10 eignet sich insbesondere für den Einsatz in elektrisch betriebenen Fahrzeugen, welche einen Elektromotor als elektrische Maschine 6 aufweisen. In derartigen Fahrzeugen kann bereits eine Gleichspannungsquelle 2c vorhanden sein, beispielsweise ein Reichweitenerweiterer oder eine Niedervoltbatterie. Es kann jedoch auch möglich sein, die Gleichspannungsquelle 2c ausschließlich für den Ladebetrieb mit dem System 100 zu koppeln.

Das Verfahren 10 kann als ersten Schritt 11 ein Verbinden bzw. Koppeln der Ausgangsanschlüsse 1a, 1 b der Energiespeichereinrichtung 1 mit der Gleichspannungsquelle 2c umfassen. Beispielsweise kann die Verbindung dabei über eine induktive Komponente 2a, wie zum Beispiel eine Speicherdrossel bzw. Koppelinduktivität 2a erfolgen. In diesem Fall wirken die Speicherdrossel 2a und die Gleichspannungsquelle 2c als Hochsetzsteller zusammen, so dass die Ladespannung, die einem Energiespeichermodul 3 in dem Energieversorgungsstrang bereitgestellt werden kann, durch Hochsetzen der in der Gleichspannungsquelle 2c vorhandenen Spannung in der Speicherdrossel 2a erhöht werden kann. Die induktive Komponente 2a kann generell eine Koppelinduktivität 2a sein, die zum Beispiel auch als parasitäre Induktivität am Ausgang der Energiespeichereinrichtung 1 vorliegt. Es kann auch möglich sein, dass sich eine gesamte Induktivität des Systems aus örtlich verteilten induktiven Anteilen im Energieversorgungsstrang und den Leitungen der Energiespeichereinrichtung 1 zusammensetzt. Für das Ankoppeln der Gleichspannungsquelle 2c kann die Steuereinrichtung 8 beispielsweise die Trennschütze 2d, 2e schließend ansteuern.

Zum Zwischenspeichern elektrischer Energie in dem Gleichspannungszwischenkreis 2b kann in einem Schritt 12 ein Ansteuern der Koppeleinrichtungen 7 aller Energiespeichermodule 3 zum Überbrücken der Energiespeicherzellenmodule 5 in dem Energieversorgungsstrang für eine erste vorbestimmte Zeitspanne erfolgen. Dadurch wird aus der Gleichspannungsquelle 2c elektrische Energie entnommen und als Strom in die Koppelinduktivität 2a bzw. die parasitären Induktivitäten der Energiespeichereinrichtung 1eingeprägt.

Es kann dabei möglich sein, dass die Gleichspannungsquelle 2c in einem gemischten Lade- und Versorgungsbetrieb eingesetzt wird, so dass ein Teil der elektrischen Energie zum Versorgen des Pulswechselrichters 4 über den Gleichspannungszwischenkreis 2b genutzt wird. Weiterhin kann es möglich sein, dass nicht alle Energiespeichermodule 3 überbrückt werden, um Gegenspannungen in dem Strompfad der Energiespeichereinrichtung 1 zu belassen.

Die zwischengespeicherte Energie kann dann in mindestens ein erstes Energiespeichermodul 3 des Energieversorgungsstrangs übertragen werden. Dazu kann in einem dritten Schritt 13 ein Ansteuern der Koppeleinrichtungen 7 des mindestens einen ersten Energiespeichermoduls 3 zum Schalten der jeweiligen Energiespeicherzellenmodule 5 in den Energieversorgungsstrang für eine zweite vorbestimmte Zeitspanne erfolgen, nachdem die erste vorbestimmte Zeitspanne verstrichen ist. Der durch die Koppelinduktivität 2a fließende Strom wird weiter getrieben und lädt dadurch die ersten Energiespeichermodule 3 auf. Es ist dabei möglich, immer nur ein Energiespeichermodul 3 zu laden, oder mehrere Energiespeichermodule 3 gleichzeitig zu laden. Ein Energiespeichermodul 3 kann mit der beschriebenen Vorgehensweise auch geladen werden, wenn die Gleichspannung der Gleichspannungsquelle 2c geringer als die Modulspannung des zu ladenden Energiespeichermoduls 3 ist. Somit können mit einer konstanten, insbesondere genormten Gleichspannung Energiespeichereinrichtungen 1 unterschiedlicher Größe und Auslegung geladen werden.

Wenn der Strom aus der Koppelinduktivität 2a bzw. den parasitären Induktivitäten einen vorbestimmten Grenzwert unterschreitet, kann die zweite Zeitspanne enden.

In Abhängigkeit von der Gleichspannung, der Modulspannungen, der Koppelinduktivität 2a und des gewünschten Ladestroms können die Zeitdauern der ersten und zweiten Zeitspanne entsprechend angepasst werden. Die Schritte des Überbrückens und Zuschaltens der Energiespeichermodule 3 können iteriert werden, wobei in verschiedenen Iterationsschritte verschiedene Energiespeichermodule 3 für den Ladebetrieb ausgewählt werden können, beispielsweise in Abhängigkeit vom Ladezustand, von der Belastung und/oder von der Wärmeerzeugung.

## Patentansprüche

1. Verfahren (10) zum Laden von Energiespeicherzellen (5a, 5k) einer Energiespeichereinrichtung (1) mit einer Vielzahl von in einem Energieversorgungsstrang in Serie geschalteten Energiespeichermodulen (3), welche jeweils umfassen:
ein Energiespeicherzellenmodul (5), welches mindestens eine Energiespeicherzelle (5a, 5k) aufweist, und
eine Koppeleinrichtung (7) mit Koppelelementen (7a, 7b; 7c, 7d), welche dazu ausgelegt sind, das Energiespeicherzellenmodul (5) selektiv in den Energieversorgungsstrang zu schalten oder zu überbrücken,
wobei das Verfahren (10) durch die folgenden Schritte gekennzeichnet ist:
Koppeln (11) der Ausgangsanschlüsse (1 a, 1 b) der Energiespeichereinrichtung (1) mit einer Gleichspannungsquelle (2c);
Ansteuern (12) der Koppeleinrichtungen (7) aller Energiespeichermodule (3) zum Überbrücken der Energiespeicherzellenmodule (5) in dem Energieversorgungsstrang für eine erste vorbestimmte Zeitspanne, wodurch aus der Gleichspannungsquelle (2c) elektrische Energie entnommen und als Strom in die Koppelinduktivität (2a) bzw. die parasitären Induktivitäten der Energiespeichereinrichtung (1) eingeprägt wird, wodurch elektrische Energie in einen Gleichspannungszwischenkreis (2b) zwischengespeichert werden kann; und
Ansteuern (13) der Koppeleinrichtungen (7) mindestens eines ersten Energiespeichermoduls (3) zum Schalten des Energiespeicherzellenmoduls (5) des ersten Energiespeichermoduls (3) in den Energieversorgungsstrang für eine zweite vorbestimmte Zeitspanne, nachdem die erste vorbestimmte Zeitspanne verstrichen ist.

2. Verfahren (10) nach Anspruch 1, wobei der Schritt des Koppelns (11) das Koppeln eines der Ausgangsanschlüsse (1a, 1b) der Energiespeichereinrichtung (1) mit der Gleichspannungsquelle (2c) über eine Koppelinduktivität (2a) umfasst, und wobei die Dauer der zweiten vorbestimmten Zeitspanne von einem Betrag des Stroms durch die Koppelinduktivität (2a) abhängig ist.

3. Verfahren (10) nach Anspruch 1, wobei die Dauer der zweiten vorbestimmten Zeitspanne von einem Betrag des Stromflusses durch das Energiespeicherzellenmodul (5) des ersten Energiespeichermoduls (3) abhängig ist.

4. Verfahren (10) nach einem der Ansprüche 1 bis 3, wobei die Schritte des Überbrückens der Energiespeicherzellenmodule (5) und des Schaltens mindestens eines Energiespeicherzellenmoduls (5) in den Energieversorgungsstrang iteriert werden.

5. Verfahren (10) nach Anspruch 4, wobei in einem Iterationsschritt ein Ansteuern (13) der Koppeleinrichtungen (7) mindestens eines zweiten Energiespeichermoduls (3) zum Schalten des Energiespeicherzellenmoduls (5) des zweiten Energiespeichermoduls (3) in den Energieversorgungsstrang erfolgt.

6. System (100), mit:
einer Energiespeichereinrichtung (1) mit einer Vielzahl von in einem Energieversorgungsstrang in Serie geschalteten Energiespeichermodulen (3), welche jeweils umfassen:
ein Energiespeicherzellenmodul (5), welches mindestens eine Energiespeicherzelle (5a, 5k) aufweist, und
eine Koppeleinrichtung (7) mit Koppelelementen (7a, 7b; 7c, 7d), welche dazu ausgelegt sind, das Energiespeicherzellenmodul (5) selektiv in den Energieversorgungsstrang zu schalten oder zu überbrücken;
einem Gleichspannungszwischenkreis (2b), welcher mit Ausgangsanschlüssen (1a, 1b) der Energiespeichereinrichtung (1) gekoppelt ist;
einem Pulswechselrichter (4), welcher mit dem Gleichspannungszwischenkreis (2b) gekoppelt ist, und welcher aus dem Gleichspannungszwischenkreis (2b) mit einer Eingangsspannung gespeist wird;
einer elektrischen Maschine (6), welche mit dem Pulswechselrichter (4) gekoppelt ist, und welche von dem Pulswechselrichter (4) mit einer Phasenspannung versorgt wird;
**gekennzeichnet durch**
eine Gleichspannungsquelle (2c), welche schaltbar mit den Ausgangsanschlüssen (1a, 1b) der Energiespeichereinrichtung (1) verbunden ist; und **durch**
eine Steuereinrichtung (8), welche mit den Koppeleinrichtungen (7) gekoppelt ist, und welche dazu ausgelegt ist, die Koppeleinrichtungen (7) der Energiespeichereinrichtung (1) zum Bereitstellen einer Gesamtausgangsspannung der Energiespeichereinrichtung (1) selektiv anzusteuern und ein Verfahren (10) nach einem der Ansprüche 1 bis 5 durchzuführen.

7. System (100) nach Anspruch 6, wobei die Koppeleinrichtungen (7) Koppelelemente (7a; 7b; 7c; 7d) in Vollbrückenschaltung umfassen.

8. System (100) nach Anspruch 6, wobei die Koppeleinrichtungen (7) Koppelelemente (7a; 7c) in Halbbrückenschaltung umfassen.

9. System (100) nach einem der Ansprüche 6 bis 8, wobei die Energiespeicherzellen (5a, 5k) Lithium-Ionen-Akkumulatoren umfassen.

10. System (100) nach einem der Ansprüche 6 bis 9, weiterhin mit:
einer Koppelinduktivität (2a), welche zwischen einen der Ausgangsanschlüsse (1a) der Energiespeichereinrichtung (1) und die Gleichspannungsquelle (2c) gekoppelt ist.

11. System (100) nach einem der Ansprüche 6 bis 10, wobei die Gleichspannungsquelle (2c) eine Solarzelle, ein Reichweitenerweiterer, eine Niedervoltbatterie oder eine Zwei-Quadranten-Stromquelle ist.

## Claims

1. Method (10) for charging energy storage cells (5a, 5k) of an energy storage device (1) comprising a multiplicity of energy storage modules (3) connected in series in an energy supply string, which energy storage modules each comprise:
an energy storage cell module (5), which has at least one energy storage cell (5a, 5k), and
a coupling device (7) comprising coupling elements (7a, 7b; 7c, 7d), which are configured to selectively switch the energy storage cell module (5) into the energy supply string or to bypass said energy storage cell module,
wherein the method (10) is **characterized by** the following steps:
coupling (11) the output connections (1a, 1b) of the energy storage device (1) to a DC voltage source (2c);
actuating (12) the coupling devices (7) of all energy storage modules (3) for bypassing the energy storage cell modules (5) in the energy supply string for a first predetermined time span, as a result of which electrical energy is drawn from the DC voltage source (2c) and impressed as current into the coupling inductance (2a) or the parasitic inductances of the energy storage device (1), as a result of which electrical energy can be buffer-stored in a DC link (2b); and
actuating (13) the coupling devices (7) of at least one first energy storage module (3) for switching the energy storage cell module (5) of the first energy storage module (3) into the energy supply string for a second predetermined time span once the first predetermined time span has elapsed.

2. Method (10) according to Claim 1, wherein the coupling step (11) comprises coupling of one of the output connections (1a, 1b) of the energy storage device (1) to the DC voltage source (2c) via a coupling inductance (2a), and wherein the duration of the second predetermined time span is dependent on an absolute value of the current through the coupling inductance (2a).

3. Method (10) according to Claim 1, wherein the duration of the second predetermined time span is dependent on an absolute value of the current flow through the energy storage cell module (5) of the first energy storage module (3).

4. Method (10) according to one of Claims 1 to 3, wherein the steps of bypassing the energy storage cell modules (5) and switching at least one energy storage cell module (5) into the energy supply string are iterated.

5. Method (10) according to Claim 4, wherein, in an iteration step, actuation (13) of the coupling devices (7) of at least one second energy storage module (3) for switching the energy storage cell module (5) of the second energy storage module (3) into the energy supply string takes place.

6. System (100), comprising:
an energy storage device (1) comprising a multiplicity of energy storage modules (3) connected in series in an energy supply string, which energy storage modules each comprise:
an energy storage cell module (5), which has at least one energy storage cell (5a, 5k), and
a coupling device (7) comprising coupling elements (7a, 7b; 7c, 7d), which are configured to selectively switch the energy storage cell module (5) into the energy supply string or to bypass said energy storage cell module;
a DC link (2b), which is coupled to output connections (1a, 1b) of the energy storage device (1);
a pulse-controlled inverter (4), which is coupled to the DC link (2b) and which is fed an input voltage from the DC link (2b);
an electric machine (6), which is coupled to the pulse-controlled inverter (4) and which is supplied a phase voltage by the pulse-controlled inverter (4);
**characterized by**
a DC voltage source (2c), which is connected switchably to the output connections (1a, 1b) of the energy storage device (1); and by
a control device (8), which is coupled to the coupling devices (7) and which is configured to selectively actuate the coupling devices (7) of the energy storage device (1) for providing a total output voltage of the energy storage device (1) and to implement a method (10) according to one of Claims 1 to 5.

7. System (100) according to Claim 6, wherein the coupling devices (7) comprise coupling elements (7a; 7b; 7c; 7d) in a full-bridge circuit.

8. System (100) according to Claim 6, wherein the coupling devices (7) comprise coupling elements (7a; 7c) in a half-bridge circuit.

9. System (100) according to one of Claims 6 to 8, wherein the energy storage cells (5a, 5k) comprise lithium-ion rechargeable batteries.

10. System (100) according to one of Claims 6 to 9, further comprising:
a coupling inductance (2a), which is coupled between one of the output connections (1a) of the energy storage device (1) and the DC voltage source (2c).

11. System (100) according to one of Claims 6 to 10, wherein the DC voltage source (2c) is a solar cell, a range extender, a low-voltage battery or a two-quadrant current source.

## Revendications

1. Procédé (10) destiné à charger des éléments accumulateurs d'énergie (5a, 5k) d'un dispositif d'accumulation d'énergie (1) comprenant une pluralité de modules d'accumulation d'énergie (3), connectés en série dans un circuit d'alimentation en énergie, qui comprennent respectivement :
un module d'éléments accumulateurs d'énergie (5) qui comporte au moins un élément accumulateur d'énergie (5a, 5k), et
un dispositif de couplage (7) doté d'éléments de couplage (7a, 7b ; 7c, 7d) conçus pour insérer ou
ponter sélectivement le module d'éléments accumulateurs d'énergie (5) dans le circuit d'alimentation en énergie,
dans lequel le procédé (10) est **caractérisé par** les étapes consistant à :
coupler (11) les bornes de sortie (1a, 1b) du dispositif d'accumulation d'énergie (1) à une source de tension continue (2c) ;
commander (12) les dispositifs de couplage (7) de tous les modules d'accumulation d'énergie (3) de façon à ponter les modules d'éléments accumulateurs d'énergie (5) dans le circuit d'alimentation en énergie pendant un premier intervalle de temps prédéterminé, de l'énergie électrique étant prélevée de la source de tension continue (2c) et étant appliquée sous la forme d'un courant à l'inductance de couplage (2a) ou aux inductances parasites du dispositif d'accumulation d'énergie (1), dans lequel de l'énergie électrique pouvant être accumulée temporairement dans un circuit intermédiaire à tension continue (2b) ; et
commander (13) les dispositifs de couplages (7) d'au moins un premier module d'accumulation d'énergie (3) pour insérer le module d'éléments accumulateurs d'énergie (5) du premier module d'accumulation d'énergie (3) dans le circuit d'alimentation en énergie pendant un second intervalle de temps prédéterminé après que la première durée prédéterminée s'est écoulée.

2. Procédé (10) selon la revendication 1, dans lequel l'étape de couplage (11) comprend le couplage de l'une des bornes de sortie (1a, 1b) du dispositif d'accumulation d'énergie (1) à la source de tension continue (2c) par l'intermédiaire d'une inductance de couplage (2a), et dans lequel la durée du second intervalle de temps prédéterminé dépend de l'intensité du courant passant à travers l'inductance de couplage (2a).

3. Procédé (10) selon la revendication 1, dans lequel la durée du second intervalle de temps prédéterminé dépend de l'intensité du courant passant à travers le module d'éléments accumulateurs d'énergie (5) du premier module d'accumulation d'énergie (3).

4. Procédé (10) selon l'une quelconque des revendications 1 à 3, dans lequel les étapes consistant à ponter le module d'éléments accumulateurs d'énergie (5) et à insérer au moins un module d'éléments accumulateurs d'énergie (5) dans le circuit d'alimentation en énergie sont répétées.

5. Procédé (10) selon la revendication 4, dans lequel une commande (13) des dispositif de couplage (7) d'au moins un second module d'accumulation d'énergie (3) est effectuée lors d'une étape d'itération pour insérer le module d'éléments accumulateurs d'énergie (5) du second module d'accumulation d'énergie (3) dans le circuit d'alimentation en énergie.

6. Système (100), comportant :
un dispositif d'accumulation d'énergie (1) comportant une pluralité de modules d'accumulation d'énergie (3) connectés en série dans un circuit d'alimentation en énergie, comprenant respectivement :
un module d'éléments accumulateurs d'énergie (5) qui comporte au moins un élément d'accumulation d'énergie (5a, 5k), et
un dispositif de couplage (7) doté d'éléments de couplage (7a, 7b ; 7c, 7d) conçus pour insérer ou ponter sélectivement le module d'éléments accumulateurs d'énergie (5) dans le circuit d'alimentation en énergie,
un circuit intermédiaire à tension continue (2b) qui est couplé à des bornes de sortie (1a, 1b) du dispositif d'accumulation d'énergie (1) ;
un onduleur à impulsions (4) qui est couplé au circuit intermédiaire à tension continue (2b) et est alimenté par une tension d'entrée provenant du circuit tampon à tension continue (2b) ;
une machine électrique (6) qui est couplée à l'onduleur à impulsions (4) et qui est alimentée par une tension de phase provenant de l'onduleur à impulsion (4) ;
**caractérisé par** une source de tension continue (2c) qui est connectée de manière commutable aux bornes de sortie (1a, 1b) du dispositif d'accumulation d'énergie (1) ; et
par une unité de commande (8) qui est couplée aux dispositifs de couplage (7) et qui est conçue pour commander sélectivement les dispositifs de couplage (7) du dispositif d'accumulation d'énergie (1) pour fournir une tension de sortie totale du dispositif de stockage d'énergie (1) et pour mettre en oeuvre un procédé (10) selon l'un quelconque des revendications 1 à 5.

7. Système (100) selon la revendication 6, dans lequel les dispositifs de couplage (7) comprennent des éléments de couplage (7a ; 7b ; 7c ; 7d) connectés en pont intégral.

8. Système (100) selon la revendication 6, dans lequel les dispositifs de couplage (7) comprennent des éléments de couplage (7a ; 7c) connectés en demi-pont.

9. Système (100) selon l'une quelconque des revendications 6 à 8, dans lequel les éléments accumulateurs d'énergie (5a, 5k) comprennent des accumulateurs au lithium ion.

10. Système (100) selon l'une quelconque des revendications 6 à 9, comportant en outre :
une inductance de couplage (2a) qui est couplée entre l'une des bornes de sortie (1a) du dispositif d'accumulation d'énergie (1) et la source de tension continue (2c).

11. Système (100) selon l'une quelconque des revendications 6 à 10, dans lequel la source de tension continue (2c) est une pile solaire, un dispositif d'augmentation de portée, une batterie à basse tension ou une source de courant à deux quadrants.
